# EUROPÄISCHE PATENTSCHRIFT

(11) **EP 2 020 271 B1**
(45) Veröffentlichungstag und Bekanntmachung des Hinweises auf die Patenterteilung: **11.01.2012**
(21) Anmeldenummer: 08450094.1
(22) Anmeldetag: 25.06.2008
(51) Int. Cl.: B23D 61/02, B27B 5/32

(54) **Flanschsägeblatt**
Flange saw blade
Lame de scie à bride

(30) Priorität: 26.07.2007 AT 11842007
(43) Veröffentlichungstag der Anmeldung: 04.02.2009
(73) Patentinhaber: Böhler Miller Messer und Sägen GmbH, 3333 Böhlerwerk (AT)
(72) Erfinder: Frey, Lambert, Ing., 3131 Getzersdorf 123 (AT); Gärtner, Andreas, 3133 Traismauer (AT); Schriebl, Hubert, 3822 Karlstein a.d.Thaya (DE)
(74) Vertreter: Wildhack & Jellinek

(56) Entgegenhaltungen:
- EP-A1- 0 865 855
- WO-A1-88/04970
- WO-A1-89/04748
- DE-A1- 3 614 341
- DE-C1- 3 318 894
- DE-U1- 8 908 563

## Beschreibung

Die Erfindung betrifft ein Flanschsägeblatt für Kreissägen, bei welchem der achsnahe Flanschbereich, verglichen mit dem Blattbereich, eine größere Dicke und Befestigungsbohrungen aufweist gemäß des Oberbegriffes des Anspruchs 1. Ein derartiges Flanschägeblatt wird in der DE-U-89 08 563 offenbart.

Flanschsägeblätter bzw. Kreissägeblätter mit dickerem Nabenteil sind aus dynamischen, mechanischen und gegebenenfalls thermischen Gründen mit Vorteil verwendbar.

Derartige Sägeblätter werden mittels Drehens oder Schleifens aus einem dickwandigen Rundstück gefertigt.

Es ist auch bekannt, auf ein dünnes Sägeblatt zur Erhöhung der Dicke des achsnahen Bereiches einen Flanschring aufzunieten. Das Nabenteil mit dem Blattkörper wird dabei zumeist durch konisch aufgeweitete Schraubenlöcher mittels konischer Passschrauben mit dem Antriebsmittel verbunden. Wie die DE 36 14 341 A1 offenbart, ist mit dieser Befestigungsart des Sägeblattes eine radiale Zentrierung derselben am Antrieb auf einfache Weise möglich.

Zur besseren Kraftübertragung und zur Verminderung des Lochleibungsdruckes kann auch der konzentrische Flanschring mit dem Sägeblatt durch Schweißpunkte verbunden oder, wie in der EP 0 865 855 A1 und der DE 36 14 341 A1 vorgeschlagen wird, verklebt sein.

Für eine Verdrehsicherung und Einspannung einer Trennschleifscheibe kann auch gemäß WO 2006/042 352 A1 ein System mit zwei Spanntafeln zwischen Spannflanschen vorgesehen werden.

Eine planparallele Verbindung zwischen Flanschteil und Sägeblatt hat zumeist jedoch nachteilige Wirkungen auf die Gebrauchseigenschaften der Säge und die Schnittgüte. Eine Nietverbindung beispielsweise kann eine Welligkeit des Sägeblattes bewirken, wie dies auch bei einem örtlichen Schweißen auftreten kann und Klebeverbindungen verlieren zumeist bei steigender Temperatur über einen Grenzwert, was bei Sägen eintreten kann, die erforderliche Festigkeit.

Die Ereindung bezweckt die Vermeidung dieser Nachteils und setzt sich zum Ziel, ein Flanschsägeblatt der eingangs genannten Art für Kreissägen zu schaffen, welches mit dem Antriebsteil sicher verbindbar ist, verzugsfrei hohen Belastungen stand hält, Vorteile in der Lagerhaltung aufweist und hohe Wirtschaftlichkeit besitzt.

Dieses Ziel wird mit den Merkmalen des Anspruchs 1 erreicht.

Mit dem erfindungsgemäßen Flanschsägeblatt wird eine Vielzahl von Vorteilen erreicht. Zum Einen sind die für eine Verbindung der Säge mit dem Antriebsmittel erforderlichen Befestigungsbohrungen nur im Naben- oder Flanschteil angeordnet, sodass eine gegebenenfalls örtlich überzogene oder ungleich feste Verbindung sich keinesfalls auf einen Verzug des dünnen Blattkörpers auswirkt und derart das Entstehen von Welligkeit desselben vermindert wird. Zum Zweiten erfolgt erfindungsgemäß ein Positionieren des Blattkörpers am Nabenteil mittels Passflächen, wodurch ein hoch präzises Fügen erreicht wird. Auch bei hoher Temperaturbelastung im schweren Betrieb des Sägeblattes liegt hohe Stabilität vor, sodass die Schnittgenauigkeit dabei im Wesentlichen erhalten klebt. Schließlich ist das Fügen zwischen Nabenteil und Blattkörper durch lösbare Verbindungsmittel erstellt, sodass eine günstige Lagerhaltung und getrennte Bereitstellung der Komponenten des Flanschsägeblattes erfolgen kann, wodurch gegebenenfalls hohe Wirtschaftlichkeit erzielbar ist.

Wenn, wie nach einer bevorzugten Ausführungsform, zumindest zwischen den jeweiligen Bereichen mit achsialer Befestigungsbohrung am Nabenteil im Wesentlichen axial zylindrische oder kegelige Teilflächen als Passflächen für den Blattkörper ausgeformt sind, kann eine besonders stabile, genaue oder auch leicht lösbare Fügeverbindung erstellt werden.

Durch die Verbindungsmittel für das Fügen von Blattkörper und Nabenteil in mindestens drei Bereichen zwischen den Befestigungsbohrungen desselben, die im Wesentlichen konzentrisch zur Axe angeordnet sind, ist zusätzlich zur axialen die radiale Stabilität der Fügeverbindung erhöht. Diese weitere Stabilität kann sich in besonders grobem Sägebetrieb vorteilhaft auf eine lange Einsatzbereitschaft und auf die Gebrauchseigenschaften des Flanschsägeblattes auswirken.

Wenn in günstiger Weise die Fügeverbindungsmittel durch Senkkopfschrauben mit einem Kegelwinkel K < von 60 bis 120°, insbesondere von 90°, in durch Reiben eingesenkten Hohlen im Blattkörper lösbar ausgeformt sind, kann eine weitgehend selbsthemmende Befestigung einer lösbaren Fügeverbindung erreicht werden.

Um eine besonders auf eine auf die unterschiedlichen Beanspruchungen abgestimmte, hervorragende Gesamtgüte des Flanschsägeblattes zu erreichen, kann es von besonderem Vorteil sein, wenn das Nabentell und der Blattkörper aus unterschiedlichen Werkstoffen und/oder aus Werkstoffen mit unterschiedlichen Eigenschaftsmerkmalen gebildet sind.

Im Folgenden wird die Erfindung anhand von lediglich einen Ausführungsweg darstellenden Zeichnungen näher erläutert.

Es zeigt:
- Fig. 1: ein erfindungsgemäßes Flanschsägeblatt in Ansicht
- Fig. 2: Schnitt A-A von Fig, 1 im Bereich der Befestigungsbohrungen im Flanschteil
- Fig. 3: Schnitt B-B von Fig. 1 im Bereich Verbindungsmittel von Nabenteil und Blattkörper

Nachfolgend Ist eine Bezugszeichenliste angegeben, die als Hilfestellung für ein Auffinden der Teile In den Darstellungen dienen soll.

### Bezugszeichenliste

- S: Flanschsägeblatt
- 1: Blattkörper
- 11: Blattkörper Außendurchmesser
- 12: Blattkörperdicke
- 13: Fügebohrung
- 131: Innerer Kegeldurchmesser
- 132: Äußerer Kegeldurchmesser
- 14: Abstandswinkel der Fügebohrungen
- 141,141': Innerer Abstand der Fügebohrungen
- 15: Winkelabstand Fügebohrung/Befestigungsbohrung
- 2: Nabenteil
- 21: Nabenteil Außendurchmesser
- 22: Nabenteildicke
- 23: Befestigungsbohrung
- 231: Innerer Kegeldurchmesser
- 232: Äußerer Kegeldurchmesser
- 24: Winkelabstand der Bohrungen
- 25: Stufendicke
- 26: Schraubengewinde
- 3: Passflächen
- 31: Passflächen Innendurchmesser
- 4: Flanschsägeblatt Innendurchmesser

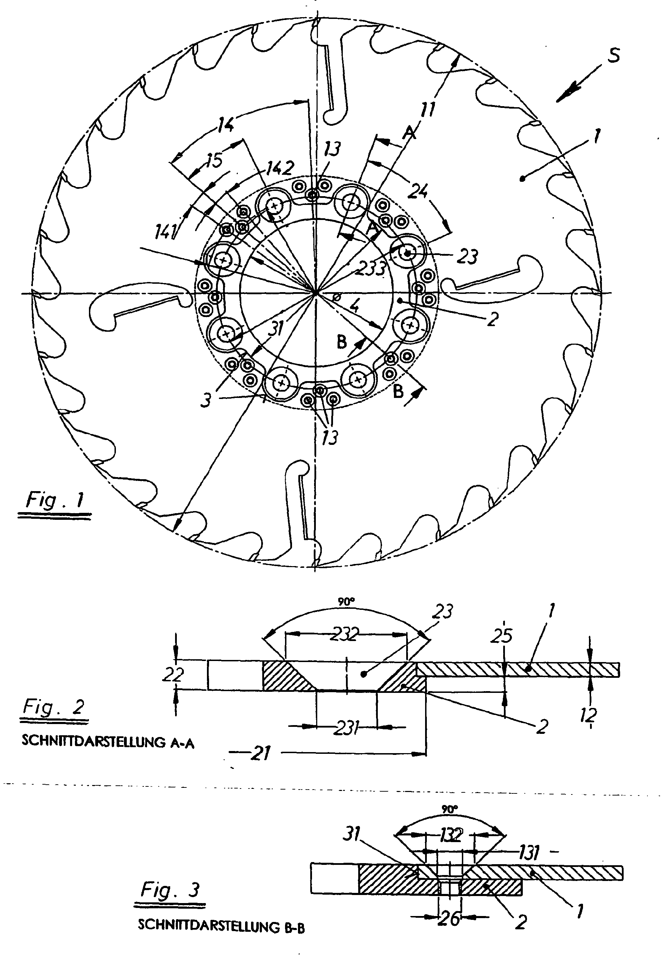

Fig. 1 zeigt in axialer Draufsicht ein Flanschsägeblatt S mit einem Blattkörper 1 und einem mit ersterem in Verbindung stehenden Nabenteil 2. Ein Außendurchmesser 11 des Blattkörpers 1 wird dabei durch den Flugkrels von Schneidelementen gebildet.

An einem Nabenteil 2 mit einem Innendurchmesser 4 des Hohles ist außenseitig ein Blattkörper 2 mittels Fügeverbindungen 13 festgelegt, welche Verbindungen einen Abstandswinkel 14 im Fügebereich zueinander besitzen und Symmetrie 141, 141' zum Bereichszentrum aufweisen.

In einem Winkelabstand 15 zum Zentrum der Fügeverbindungen 13 hat der Nabenteil 2 Befestigungsbohrungen 23, die einen gleichen Winkelabstand 24 und einen Axabstand 233 aufweisen.

Passflächen 3 für eine stabile Positionierung eines Blattkörpers 1 im Nabenteil 2 sind jeweils wellig mit einem Abstand um die Fügebohrungen 13 im Blattkörper 1 und um die Befestigungsbohrungen 23 im Nabenteil 2 der Flanschsäge S ausgebildet. Diese Ausbildungsform der Passflächen 3 mit einem Innendurchmesser 31 sichert geringste Blattverwerfungen bzw. Welligkeit des Blattkörpers 1, weil sowohl Fügebohrungen 13 desselben und Befestigungsbohrungen 23 vom Nabenteil 2 in einem etwa gleichen axkonzentrischen Bereich liegen.

In Fig. 2 ist die Schnittdarstellung A-A aus Fig. 1 im Anliegebereich eines Blattkörpers 1 mit einer Dicke 12 und eines Nabenteiles 2 einer Flanschsäge S gezeigt. Im Flanschteil 2 ist eine konische Befestigungsbohrung 23 mit innerem Kegeldurchmesser 231 und äußerem Kegeldurchmesser 232 eingebracht, wobei der Kegelwinkel K < beispielsweise 90° beträgt.

Passflächen 3 für eine Positionierung eines Blattkörpers 1 im Nabenteil 2 sind mit einer Stufendicke 25 in diesem angeordnet.

Fig. 3 zeigt eine Schnittdarstellung B-B von Fig. 1 und zwar eine Fügeverbindungsstelle zwischen Blattkörper 1 und Nabenteil 2. Ein Nabenteil 2 hat Bohrungen mit einem Schraubengewinde 26. Ein an einer Passfläche 3 mit einem Innendurchmesser 31 anliegende Blattkörper 1 weist gewindehohlfluchtend kegelige Fügebohrungen 13 mit einem Innendurchmesser 131 und einem Außendurchmesser 132 angebend einen Kegelwinkel K < von beispielsweise 90° auf.

## Patentansprüche

1. Flanschsägeblatt (S) für Kreissägen, bei welchem der achsnahe Flanschbereich, verglichen mit dem Blattbereich, eine größere Dicke und Befestigungsbohrungen aufweist, wobei das Flanschsägeblatt (S) als Verbundteil aus einem Naben- oder Flanschteil (2) mit achsial gerichteten Befestigungsbohrungen (23) für die Säge und einem Blattkörper (1) gebildet ist, wobei das Nabenteil (2) mit dem Antriebsmittel verbindbar ist, **dadurch gekennzeichnet, dass** Blattkörper (1) am Nabenteil (2) mittels Passflächen (3), *welche jeweils wellig mit einem Abstand um als Fügebohrungen (13) ausgebildete Verbindungsmittel (15) im Blattkörper (1) und um die Befestigungsbohrungen (23) im Nabenteil (2) der Flanschsäge (S) ausgebildet sind,* positioniert ist und die Teile durch die Fügebohrungen (13) lösbar gefügt sind.

2. Flanschsägeblatt nach Anspruch 1, **dadurch gekennzeichnet, dass** zumindest zwischen den jeweiligen Bereichen mit achslaler Befestigungsbohrung (23) am Nabenteil (2) im Wesentlichen axial zylindrische oder kegelige Teilflächen als Passflächen (3) für den Blattkörper (1) ausgeformt sind.

3. Flanschsägeblatt nach Anspruch 1 oder 2, **dadurch gekennzeichnet, dass** die Verbindungsmittel (13) für das Fügen von Blattkörper (1) und Nabenteil (2) mindestens in drei Bereichen zwischen den Befestigungsbohrungen (23) desselben im Wesentlichen konzentrisch zur Axe angeordnet sind.

4. Flanschsägeblatt nach einem der Ansprüche 1 bis 3, **dadurch gekennzeichnet, dass** die Fügeverbindungsmittel (13) durch Senkkopfschrauben mit einem Kegelwinkel K < von 60 bis 120°, insbesondere von 90°, in durch Reiben eingesenkten Hohlen im Blattkörper (1) lösbar ausgeformt sind.

5. Flanschsägeblatt nach einem der Ansprüche 1 bis 4, **dadurch gekennzeichnet, dass** das Nabenteil (2) und der Blattkörper (1) aus unterschiedlichen Werkstoffen und/oder aus Werkstoffen mit unterschiedlichen Eigenschaftsmerkmalen gebildet sind.

## Claims

1. Flange saw blade (S) for circular saws, in which the flange region near the axis, as compared with the blade region, has a greater thickness and fastening bores, wherein said flange saw blade (S) is formed as a composite part of a hub or flange part (2) comprising axially directed fastening bores (23) for the saw, and a blade body (1), the hub part (2) being connectable with drive means, **characterised in that** the blade body (1) is positioned at the hub part (2) by means of fitting surfaces (3) each of which being formed in a wavy manner with a distance around connection means, formed as joining bores (13) in the blade body (1), the fastening bores (23) being formed in the hub portion (2) of said flange saw (S), and the parts are releasably joined by said joining bores (13).

2. Flange saw blade according to claim 1, **characterised in that** substantially axially cylindrical or conical partial surfaces are formed as fitting surfaces (3) for the blade body (1) at least between the respective regions comprising an axial fastening bore (23) on the hub part (2).

3. Flange saw blade according to claim 1 or 2, **characterised in that** said connection means (13) for joining blade body (1) and hub part (2) are arranged in at least three regions between said fastening bores (23) of it substantially concentrically to the axis.

4. Flange saw blade according to any of claims 1 to 3, **characterised in that** the joining connection means (13) are releasably formed by countersunk head screws having a cone angle K < of 60 to 120°, particularly of 90°, in cavities countersunk by rubbing in the blade body (1).

5. Flange saw blade according to any of claims 1 to 4, **characterised in that** the hub part (2) and the blade body (1) are formed of different materials and/or of materials having different property characteristics.

## Revendications

1. Lame de scie à bride (S) pour des scies circulaires, dans laquelle la région de bride proche à l'axe, en comparaison avec la région de lame, a une épaisseur plus grande et comprend des alésages de fixation, dans laquelle la lame de scie à bride (S) est formée comme une part composite d'une partie de moyeu ou de bride (2) comprenant des alésages de fixation (23) pour la scie dirigés axialement et un corps de lame (1), et dans laquelle la partie de moyeu (2) est connectable avec le moyen d'entraînement, **caractérisé en ce, que** le corps de lame (1) est positionné à la partie de moyeu (2) à l'aide des surfaces de contact (3), qui sont formée chacune d'une façon ondulée ayant une distance autour des moyens de connexion (13) formés comme des alésages d'assemblage (13) dans le corps de lame (1) et autour des alésages de fixation (23) dans la partie de moyeu (2) de la scie à bride (S), et que les parts sont assemblés d'une manière détachable par les alésages d'assemblage (13).

2. Lame de scie à bride selon la revendication 1, **caractérisé en ce, que** des surfaces partielles sensiblement axialement cylindriques ou coniques sont formées comme des surfaces de contact (3) pour le corps de lame (1) au moins entre les régions respectives comprenant un alésage de fixation axial (23) à la partie de moyeu (2).

3. Lame de scie à bride selon la revendication 1 ou 2, **caractérisé en ce, que** les moyens de connexion (13) pour assembler le corps de lame (1) et la partie de moyeu (2) sont disposés d'une manière sensiblement concentrique à l'axe au moins dans trois régions entre les alésages de fixation (23) de celle-ci.

4. Lame de scie à bride selon une quelconque des revendications 1 à 3, **caractérisé en ce, que** les moyens de connexion de l'assemblage (13) sont formés de façon détachable par des boulons à tête conique d'un angle de cône K < de 60 à 120°, particulièrement de 90°, dans des cavités fait par chambrage par frottement dans le corps de lame (1).

5. Lame de scie à bride selon une quelconque des revendications 1 à 4, **caractérisé en ce, que** la partie de moyeu (2) et le corps de lame (1) sont formés des matières différentes et/ou des matières ayant des caractéristiques différentes de propriété.
